# EUROPEAN PATENT SPECIFICATION

(11) **EP 4 095 366 B1**
(45) Date of publication and mention of the grant of the patent: **15.05.2024**
(21) Application number: 20915078.8
(22) Date of filing: 23.01.2020
(51) Int. Cl.: F01P 3/20, F01P 11/08, F02B 29/04, F01M 11/00, F02M 26/28

(54) **COOLING SYSTEM FOR VEHICLE**
KÜHLSYSTEM FÜR FAHRZEUG
SYSTÈME DE REFROIDISSEMENT POUR VÉHICULE

(43) Date of publication of application: 30.11.2022
(73) Proprietor: NISSAN MOTOR Co., Ltd., Yokohama-shi, Kanagawa 221-0023 (JP); Renault s.a.s, 92100 Boulogne Billancourt (FR)
(72) Inventor: HAMAMOTO, Takayuki, Atsugi-shi, Kanagawa 243--0123 (JP); TSUCHIDA, Hirofumi, Atsugi-shi, Kanagawa 243--0123 (JP)
(74) Representative: Global IP Europe Patentanwaltskanzlei
(86) International application number: PCT/IB2020/000032
(87) International publication number: WO 2021/148829

(56) References cited:
- JP-A- 2003 343 267
- JP-A- 2004 092 960
- JP-A- 2010 059 880
- JP-A- 2010 059 880
- JP-A- 2017 101 639
- US-A1- 2015 107 566

## Description

### Technical Field

This invention relates to a vehicle cooling device in which a plurality of heat exchangers are arranged in an engine installed in the vehicle.

### Background Technology

Recently, to improve fuel consumption and output of engines (internal combustion engines), there has been a trend of increasing the number of heat exchangers that cool a particular medium to be cooled using circulation of cooling water. For example, water-cooled inter-coolers, water-cooled EGR gas coolers, water-cooled condensers, and other water-cooled heat exchangers are known.

When such cooling-water-type heat exchangers are arranged in series on a cooling water circuit, cooling water that has been increased in temperature by upstream heat exchangers is supplied to downstream heat exchangers, and it is therefore highly possible that the cooling water will boil (air bubbles will be generated) in the downstream heat exchangers.

Patent Document 1 discloses a configuration in which an oil-cooling pipe is provided in an oil pan and cooling water is circulated through the oil-cooling pipe, but Patent Document 1 does not disclose the arrangement of a plurality of heat exchangers.

JP 2010/059880 A1 discloses a vehicle with a cooling device, the cooling device comprising a first heat exchanger and a second heat exchanger,
the first heat exchanger and the second heat exchanger being arranged in series on a cooling water circuit such that cooling water flowing out of the first heat exchanger flows into the second heat exchanger, and
the second heat exchanger being arranged in a position relatively lower than a height position of the first heat exchanger when the cooling device has been installed in a vehicle.

US 2015/0107566 A1 discloses an exhaust gas recirculation (EGR) device for an internal combustion engine, having an EGR passage, a cooling medium circuit, an EGR cooler, and an intercooler. The cooling medium circuit is configured independently from a coolant circuit, and at least at time of low-load operation of the engine, the cooling medium which has passed through the EG cooler flows into the intercooler.

### Prior Art Documents

### Patent Documents

Patent Document 1: Japanese Patent Application No. 2003-343267

### Disclosure of the Invention

A vehicle according to this invention has a cooling device comprising a first heat exchanger and a second heat exchanger. The first heat exchanger and the second heat exchanger are arranged in series on a cooling water circuit such that cooling water flowing out of the first heat exchanger flows into the second heat exchanger, and when the cooling device has been installed in a vehicle, the second heat exchanger is arranged in a position relatively lower than a height position of the first heat exchanger. The first heat exchanger is a water-cooled intercooler that cools supercharged intake air. The second heat exchanger is a water-cooled EGR gas cooler that cools EGR gas.

With such a configuration, cooling water pressure in the second heat exchanger, which is positioned on a downstream side, rises due to position energy resulting from the height difference between the first heat exchanger and the second heat exchanger. Therefore, boiling of the cooling water in the downstream second heat exchanger is suppressed in a commensurate manner. In addition, in an engine compartment, atmospheric temperature is higher toward an upper side, but the downstream second heat exchanger where cooling water temperature is higher is in a lower position, which is advantageous in terms of the atmospheric temperature.

### Brief Description of the Drawings

Figure 1 is an explanatory drawing schematically depicting a configuration of a cooling device of one embodiment of this invention, as seen from a side of a vehicle;
Figure 2 is an explanatory drawing of two heat exchangers and an intermediate cooling water passage as seen from a side of an engine;
Figure 3 is an explanatory drawing of a configuration of the intermediate cooling water passage in an oil pan;
Figure 4 is a main cross-sectional view of an example in which the intermediate cooling water passage is integrally formed in a bottom wall of the oil pan;
Figure 5 is a main cross-sectional view of another example in which the intermediate cooling water passage is integrally formed in the bottom wall of the oil pan; and
Figure 6 is a main cross-sectional view of yet another example in which the intermediate cooling water passage is integrally formed in the bottom wall of the oil pan.

### Preferred Embodiments of the Invention

One embodiment of this invention is described in detail below with reference to the drawings.

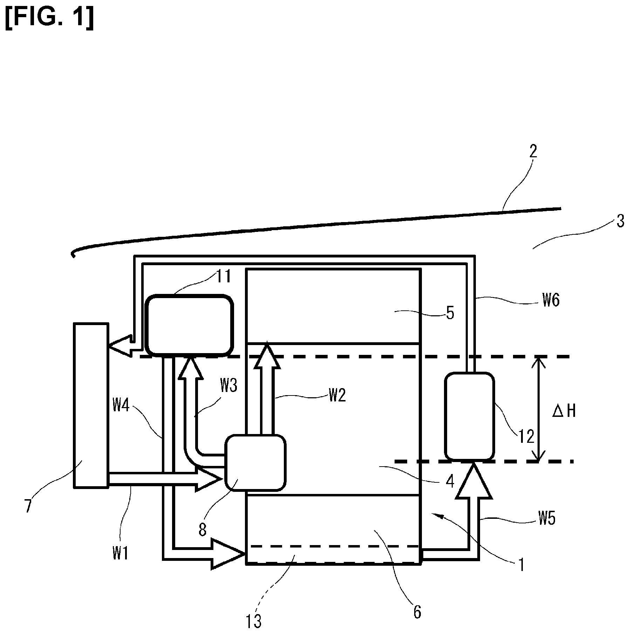

Figure 1 is an explanatory drawing schematically depicting a cooling device of one embodiment as seen from a side of a vehicle. An engine 1, which is a gasoline engine, a diesel engine, or another internal combustion engine, is mounted in an engine compartment 3 covered by a hood 2 of the vehicle. In the example depicted, the engine 1 is mounted in a "transverse format" in which a crankshaft axial direction extends along a width direction of the vehicle. The arrangement is such that an intake side, where an intake system including an intake manifold (not shown), etc., is located, faces toward the front of the vehicle, and an exhaust side, where an exhaust system including an exhaust manifold, etc., is located, faces toward the rear of the vehicle. As shown in a simple manner, the engine 1 is generally configured from a cylinder block 4, a cylinder head 5 attached to a top surface of the cylinder block 4, and an oil pan 6 attached to a lower surface of the cylinder block 4. The cylinder block 4 and the cylinder head 5 have a water jacket (not shown) therein and are configured such that cooling water circulates through the water jacket. The engine 1 is provided with a supercharger, or more specifically a turbocharger (not shown).

A radiator 7 for cooling the cooling water by using outside air is arranged in a front end section of the vehicle. Cooling water that has been brought to a low temperature by heat exchange in the radiator 7 flows as shown by arrow W1 to a cooling water pump 8 composed of an electric pump having a controllable flow rate, and the cooling water is supplied by the cooling water pump 8 to the water jacket in the engine 1 as shown by arrow W2.

As a cooling device for the vehicle, a first heat exchanger is arranged on either one of the intake side and the exhaust side of the engine 1, a second heat exchanger is arranged on the other of these two sides, and heat exchange is conducted between the cooling water and a medium to be cooled in the heat exchangers. The term "intake side" refers to the side on which the intake system including an intake port, the intake manifold, etc., is located, and the term "exhaust side" refers to the side on which the exhaust system including an exhaust port, the exhaust manifold, etc., is located. Specifically, a water-cooled intercooler 11, which uses cooling water to cool supercharged intake air that has been brought to a high temperature and high pressure by the turbocharger, is arranged on the intake side, i.e., the vehicle-forward side of the engine 1, i.e., the front side of the vehicle. A water-cooled EGR gas cooler 12, which uses cooling water to cool EGR gas recirculating from the exhaust system to the intake system, is arranged on the exhaust side, i.e., the vehicle-rearward side of the engine 1. The water-cooled intercooler 11 corresponds to the "first heat exchanger" in the claims, and the supercharged intake air, which serves as a medium to be cooled, flows into the water-cooled intercooler 11 at a temperature of about, for example, 200°C. The water-cooled EGR gas cooler 12 corresponds to the "second heat exchanger" in the claims, and EGR gas, which serves as a medium to be cooled, flows into the water-cooled EGR gas cooler 12 at a temperature of about, for example, 600-800°C. In other words, the temperature of the medium to be cooled in the water-cooled EGR gas cooler 12 is relatively higher than the temperature of the medium to be cooled in the water-cooled intercooler 11.

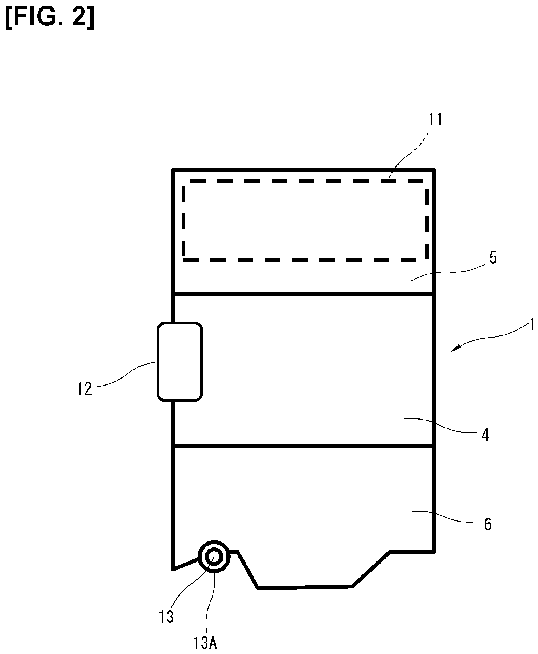

The turbocharger (not shown) is located on the exhaust side of the engine 1, i.e., near an exit of the exhaust manifold, but for supercharged intake air discharged from a compressor of the turbocharger to be introduced into the intake system after having been cooled, the water-cooled intercooler 11 is located on the intake side of the engine 1 and is arranged at a height position aligned with the cylinder head 5 in the forward-backward direction. Figure 2 is an explanatory drawing of the engine 1 as seen from the side, and as shown in Fig. 2, the water-cooled intercooler 11 has the form of a box extending lengthwise in the direction of a cylinder row.

An exhaust gas recirculation device that recirculates some of the exhaust as EGR gas from the exhaust system to the intake system is, in this embodiment, configured as a "low-pressure exhaust recirculation device" that introduces EGR gas to a low-pressure side of the supercharger, i.e., an inlet side of the compressor of the turbocharger. Therefore, it is advantageous, in terms of pipe management, for the water-cooled EGR gas cooler 12 to be located on the exhaust side of the engine 1. The water-cooled EGR gas cooler 12 is a smaller heat exchanger than the water-cooled intercooler 11 and is arranged in a height position near the middle of the cylinder block 4, as shown in Figs. 1 and 2. In addition, as shown in Fig. 2, the water-cooled EGR gas cooler 12 is located near a rear end section of the engine 1 in a longitudinal direction of the engine 1, and has the form of a box extending lengthwise up and down.

The water-cooled intercooler 11 and the water-cooled EGR gas cooler 12 have a positional relationship of being arranged in series on the cooling water circuit, the water-cooled intercooler 11 is relatively located on the upstream side, and cooling water flowing out from the water-cooled intercooler 11 flows into the water-cooled EGR gas cooler 12.

To describe the flow of cooling water in detail, first, low-temperature cooling water discharged by the cooling water pump 8 after being cooled in the radiator 7 is supplied to the upstream water-cooled intercooler 11 as shown by arrow W3. In the depicted example, a cooling water inlet is in a lower surface of the water-cooled intercooler 11, and low-temperature cooling water is introduced through the cooling water inlet. The cooling water pump 8 supplies cooling water to two systems, which are a path shown by arrow W2 leading to the water jacket described above and a path shown by arrow W3 leading to the water-cooled intercooler 11.

Cooling water that has undergone heat exchange in the water-cooled intercooler 11 and risen in temperature also flows out from a cooling water outlet located in the lower surface of the water-cooled intercooler 11, and heads to the oil pan 6 of the engine 1 as shown by arrow W4. An intermediate cooling water passage 13 is provided to the oil pan 6 so as to cross through the oil pan 6 between the intake side and the exhaust side, and cooling water travels through the intermediate cooling water passage 13 from the intake side to the exhaust side to be introduced into the water-cooled EGR gas cooler 12 as shown by arrow W5. In the intermediate cooling water passage 13, the temperature of the cooling water rises further because the cooling water receives heat of oil in the oil pan 6. The water-cooled EGR gas cooler 12 has a cooling water inlet in a lower end and a cooling water outlet in an upper end, and cooling water flows into the water-cooled EGR gas cooler 12 from the cooling water inlet in the lower end of the water-cooled EGR gas cooler 12 and flows out from the cooling water outlet in the upper end after heat exchange. This high-temperature cooling water that has exited the water-cooled EGR gas cooler 12 circulates to the radiator 7 as shown by arrow W6 and loses heat in the radiator 7.

The paths shown by arrows W1-W6 are cooling water passages constituted essentially of pipes, except for arrow W2 which is a passage inside the engine 1.

With a cooling water flow such as that described above, the temperature of cooling water flowing into the downstream water-cooled EGR gas cooler 12 is higher than the temperature of cooling water flowing into the upstream water-cooled intercooler 11. In addition, the temperature of the medium to be cooled in the heat exchangers is relatively higher in the water-cooled EGR gas cooler 12 as described above. Furthermore, the atmospheric temperature in the engine compartment 3 is also relatively higher on the exhaust side, and the water-cooled EGR gas cooler 12 located on the exhaust side is more likely to receive radiant heat from the exhaust system. Therefore, concern regarding boiling of the cooling water is greater in the water-cooled EGR gas cooler 12.

However, with the configuration of the embodiment described above, a vertical height difference, which results in a head difference, is actively imparted between the upstream water-cooled intercooler 11 and the downstream water-cooled EGR gas cooler 12, and the water-cooled EGR gas cooler 12 is placed in a relatively low position. Therefore, the pressure of the cooling water flowing into the water-cooled EGR gas cooler 12 increases in proportion to the head difference or the height difference, and boiling of the cooling water (generation of air bubbles) inside the water-cooled EGR gas cooler 12 is suppressed. In addition, the atmospheric temperature in the engine compartment 3 becomes higher further upward near the hood 2, and positioning the water-cooled EGR gas cooler 12 lower is therefore advantageous in terms of the atmospheric temperature.

In the present invention, the height difference between the upstream first heat exchanger (the water-cooled intercooler 11) and the downstream second heat exchanger (the water-cooled EGR gas cooler 12) is, specifically, defined as the vertical height difference (shown as ΔH in Fig. 1) between the cooling water outlet of the first heat exchanger (the water-cooled intercooler 11) and the cooling water inlet of the second heat exchanger (the water-cooled EGR gas cooler 12) when the heat exchangers have been installed in the vehicle. That is, due to the cooling water inlet of the downstream second heat exchanger being located lower than the cooling water outlet of the upstream first heat exchanger, a pressure difference arises between this inlet and outlet.

Preferably, the first heat exchanger (the water-cooled intercooler 11) and the second heat exchanger (the water-cooled EGR gas cooler 12) are arranged so as to not overlap each other when viewed as a projection from the side of the engine 1 as shown in Fig. 2. This means that the entire second heat exchanger is located lower than the cooling water outlet of the first heat exchanger; therefore, the entire second heat exchanger has a head difference with the first heat exchanger.

Thus, in the configuration of the embodiment described above, the water-cooled intercooler 11 and the water-cooled EGR gas cooler 12 are arranged on the intake side and the exhaust side of the engine 1, respectively, and are connected via the intermediate cooling water passage 13 passing through the oil pan 6. Therefore, the cooling device as a whole can be made into a small package, and by creating a height difference as described above, it is possible to suppress boiling of cooling water in the downstream water-cooled EGR gas cooler 12, which is thermally disadvantageous. Because boiling is thus suppressed, under conditions where the cooling requirement is relatively low, the flow rate can be controlled to be low by the cooling water pump 8, which comprises an electric pump, and the fuel efficiency can be improved in a commensurate manner. Because the cooling water receives the heat of the oil in the intermediate cooling water passage 13, an oil-cooling effect is achieved; for example, an oil cooler (not shown) can be reduced in size.

The intermediate cooling water passage 13 can be configured from a metal pipe passing through the oil pan 6, and can also be configured as a passage formed integrally with the oil pan 6.

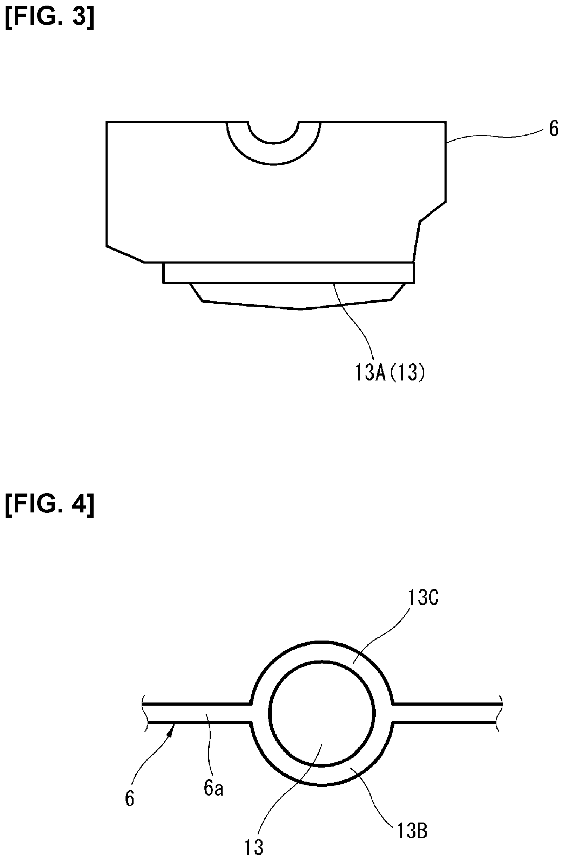

In the example shown in Figs. 2 and 3, the intermediate cooling water passage 13 is configured from a metal pipe 13A arranged near a bottom part of the oil pan 6. Figure 3 is an explanatory drawing of the oil pan 6 as a projection along a crankshaft axial direction. The metal pipe 13A is arranged so as to extend in a direction orthogonal to the crankshaft axial direction and be substantially horizontal after having been installed in the vehicle. In addition, the metal pipe 13A (i.e., the intermediate cooling water passage 13) is in a position lower than the surface of the oil in the oil pan 6 while the vehicle is being driven, and is submerged in the oil so as to exchange heat with the oil.

Figures 4-6 show examples in which an intermediate cooling water passage 13 is formed integrally in a bottom wall 6a of the oil pan 6. In the example of Fig. 4, an intermediate cooling water passage 13 having a circular cross section is formed by a downstream pipeline wall 13B and an upstream pipeline wall 13C, both of which are semicircles in cross section. The downstream pipeline wall 13B and the upstream pipeline wall 13C may be integral members with the surrounding bottom wall 6a, or may be other members joined to the bottom wall 6a.

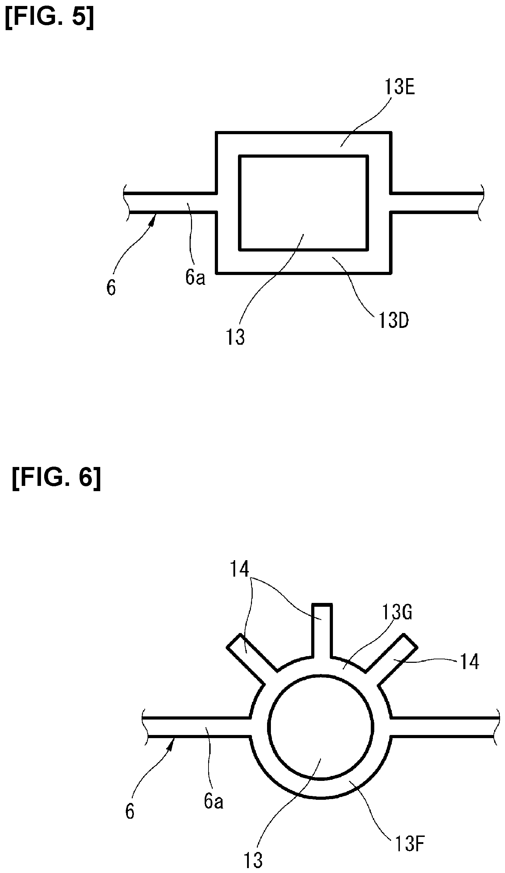

In the example of Fig. 5, an intermediate cooling water passage 13 having a rectangular cross section is formed by a downstream pipeline wall 13D and an upstream pipeline wall 13E.

In the example of Fig. 6, an intermediate cooling water passage 13 having a circular cross section is formed by a downstream pipeline wall 13F and an upstream pipeline wall 13G, and a plurality of fins 14 are provided in a radial formation to the upstream pipeline wall 13G. The fins 14 are also submerged in oil, and the area of contact (area of heat exchange) with the oil is expanded by the fins 14.

The configuration of the intermediate cooling water passage 13 is not limited to these depicted examples, and may have any shape as long as the required equivalent diameter can be ensured. For example, this passage can have a more flattened cross-sectional shape.

One embodiment of this invention was described in detail above, but the above embodiment is not provided by way of limitation on the invention; various changes can be made.

## Claims

1. A vehicle with a cooling device, the cooling device comprising a first heat exchanger (11) and a second heat exchanger (12),
the first heat exchanger (11) and the second heat exchanger (12) being arranged in series on a cooling water circuit such that cooling water flowing out of the first heat exchanger (11) flows into the second heat exchanger (12), and
the second heat exchanger (12) being arranged in a position relatively lower than a height position of the first heat exchanger (11) when the cooling device has been installed in a vehicle,
**characterized in that**
the first heat exchanger (11) is a water-cooled intercooler that cools supercharged intake air, and
the second heat exchanger (12) is a water-cooled EGR gas cooler that cools EGR gas.

2. The vehicle with a cooling device according to claim 1, wherein a temperature of a medium to be cooled flowing into the second heat exchanger (12) is relatively higher than a temperature of a medium to be cooled flowing into the first heat exchanger (11).

3. The vehicle with a cooling device according to claim 1 or 2, wherein the cooling device has an intermediate cooling water passage crossing through an interior of an oil pan (6) of an engine of the vehicle, and the cooling water flowing out of the first heat exchanger (11) passes through the intermediate cooling water passage and flows into the second heat exchanger (12).

4. The vehicle with a cooling device according to claim 3, wherein the intermediate cooling water passage is formed integrally with a bottom wall of the oil pan (6).

5. The vehicle with a cooling device according to any of claims 1 to 4, wherein a cooling water pump (8) is provided upstream of the first heat exchanger (11) and the cooling water cooled by a radiator (7) of the vehicle is supplied to the first heat exchanger (11) by the cooling water pump (8).

6. The vehicle with a cooling device according to claim 5, wherein the cooling water pump (8) comprises an electric pump having a controllable flow rate.

7. The vehicle with a cooling device according to claim 4, wherein fins (14) for increasing area of contact with oil are provided to a pipeline wall inside the oil pan (6) in which the intermediate cooling water passage is formed.

## Patentansprüche

1. Fahrzeug mit einer Kühlvorrichtung, wobei die Kühlvorrichtung einen ersten Wärmetauscher (11) und einen zweiten Wärmetauscher (12) aufweist,
wobei der erste Wärmetauscher (11) und der zweite Wärmetauscher (12) in einem Kühlwasserkreislauf in Reihe angeordnet sind, so dass aus dem ersten Wärmetauscher (11) fließendes Kühlwasser in den zweiten Wärmetauscher (12) fließt, und
der zweite Wärmetauscher (12) in einer Position angeordnet ist, die relativ niedriger ist als eine Höhenposition des ersten Wärmetauschers (11), wenn die Kühlvorrichtung in ein Fahrzeug eingebaut ist,
**dadurch gekennzeichnet, dass**
der erste Wärmetauscher (11) ein wassergekühlter Ladeluftkühler ist, der aufgeladene Ansaugluft kühlt, und
der zweite Wärmetauscher (12) ein wassergekühlter AGR-Gas-Kühler ist, der AGR-Gas kühlt.

2. Fahrzeug mit einer Kühlvorrichtung nach Anspruch 1, wobei eine Temperatur eines zu kühlenden Mediums, das in den zweiten Wärmetauscher (12) fließt, relativ höher als eine Temperatur eines zu kühlenden Mediums ist, das in den ersten Wärmetauscher (11) fließt.

3. Fahrzeug mit einer Kühlvorrichtung nach Anspruch 1 oder 2, wobei die Kühlvorrichtung einen Zwischenkühlwasserkanal aufweist, der das Innere einer Ölwanne (6) eines Motors des Fahrzeugs durchquert, und das aus dem ersten Wärmetauscher (11) abfließende Kühlwasser den Zwischenkühlwasserkanal durchläuft und in den zweiten Wärmetauscher (12) fließt.

4. Fahrzeug mit einer Kühlvorrichtung nach Anspruch 3, wobei der Zwischenkühlwasserkanal integral mit einer Bodenwand der Ölwanne (6) ausgebildet ist.

5. Fahrzeug mit einer Kühlvorrichtung nach einem der Ansprüche 1 bis 4, wobei vor dem ersten Wärmetauscher (11) eine Kühlwasserpumpe (8) vorgesehen ist und das von einem Kühler (7) des Fahrzeugs gekühlte Kühlwasser durch die Kühlwasserpumpe (8) dem ersten Wärmetauscher (11) zugeführt wird.

6. Fahrzeug mit einer Kühlvorrichtung nach Anspruch 5, wobei die Kühlwasserpumpe (8) eine elektrische Pumpe mit einer regelbaren Fördermenge aufweist.

7. Fahrzeug mit einer Kühlvorrichtung nach Anspruch 4, wobei Rippen (14) zur Vergrößerung der Kontaktfläche mit Öl an einer Rohrleitungswand innerhalb der Ölwanne (6) vorgesehen sind, in der der Zwischenkühlwasserkanal ausgebildet ist.

## Revendications

1. Véhicule équipé d'un dispositif de refroidissement, ledit dispositif de refroidissement comprenant un premier échangeur de chaleur (11) et un deuxième échangeur de chaleur (12),
le premier échangeur de chaleur (11) et le deuxième échangeur de chaleur (12) étant disposés en série sur un circuit d'eau de refroidissement de sorte que l'eau de refroidissement sortant du premier échangeur de chaleur (11) s'écoule vers le deuxième échangeur de chaleur (12), et
le deuxième échangeur de chaleur (12) étant disposé à un emplacement relativement plus bas que l'emplacement en hauteur du premier échangeur de chaleur (11) lorsque le dispositif de refroidissement est installé dans un véhicule, **caractérisé en ce que**
le premier échangeur de chaleur (11) est un refroidisseur intermédiaire à eau refroidissant l'air d'admission suralimenté, et
le deuxième échangeur de chaleur (12) est un refroidisseur de gaz EGR refroidi par eau et qui refroidit les gaz EGR.

2. Véhicule équipé d'un dispositif de refroidissement selon la revendication 1, où la température d'un fluide à refroidir s'écoulant vers le deuxième échangeur de chaleur (12) est relativement plus élevée que la température d'un fluide à refroidir s'écoulant vers le premier échangeur de chaleur (11).

3. Véhicule équipé d'un dispositif de refroidissement selon la revendication 1 ou la revendication 2, où le dispositif de refroidissement présente un passage d'eau de refroidissement intermédiaire traversant l'intérieur d'un carter d'huile (6) du moteur du véhicule, et où l'eau de refroidissement sortant du premier échangeur de chaleur (11) va vers le passage d'eau de refroidissement intermédiaire et s'écoule dans le deuxième échangeur de chaleur (12).

4. Véhicule équipé d'un dispositif de refroidissement selon la revendication 3, où le passage d'eau de refroidissement intermédiaire est formé de manière intégrée à une paroi inférieure du carter d'huile (6).

5. Véhicule équipé d'un dispositif de refroidissement selon l'une des revendications 1 à 4, où une pompe à eau de refroidissement (8) est prévue en amont du premier échangeur de chaleur (11) et où l'eau de refroidissement refroidie par un radiateur (7) du véhicule est refoulée vers le premier échangeur de chaleur (11) par la pompe à eau de refroidissement (8).

6. Véhicule équipé d'un dispositif de refroidissement selon la revendication 5, où la pompe à eau de refroidissement (8) comprend une pompe électrique à débit réglable.

7. Véhicule équipé d'un dispositif de refroidissement selon la revendication 4, où des ailettes (14) destinées à accroître la surface de contact avec l'huile sont prévues sur une paroi de conduite à l'intérieur du carter d'huile (6) où est formé le passage d'eau de refroidissement intermédiaire.
